# DEMANDE DE BREVET EUROPEEN

(11) **EP 0 545 781 A1**
(43) Date de publication de la demande: **09.06.1993**
(21) Numéro de dépôt: 92403176.8
(22) Date de dépôt: 25.11.1992
(51) Int. Cl.: G11B 21/16

(54) **Ressort pour patin de vol, procédé de réalisation de ce ressort et machine mettant en oeuvre ce procédé**

(30) Priorité: 29.11.1991 FR 9114825
(71) Demandeur: COMMISSARIAT A L'ENERGIE ATOMIQUE, F-75015 Paris (FR)
(72) Inventeur: Blanc, Henri, F-38134 Saint Julien de Ratz (FR); Barrois, Gérard, F-38120 Le Fontanil (FR); Pisella, Christian, F-38140 Beaucroissant (FR)
(74) Mandataire: Signore, Robert

(57) **Abrégé**

Ressort pour patin de vol, procédé de réalisation de ce ressort et machine mettant en oeuvre ce procédé.

Le ressort de l'invention comprend une lame flexible (30) en compression, une bande souple (40) en traction et une languette (48) où est fixé un patin de vol (50).

Application à l'enregistrement magnétique.

## Description

### Domaine technique

La présente invention a pour objet un ressort pour patin de vol, un procédé de fabrication de ce ressort et une machine mettant en oeuvre ce procédé. Elle trouve une application dans l'enregistrement magnétique d'informations, notamment sur disque.

### Etat de la technique antérieure

L'enregistrement magnétique d'informations pour les ordinateurs utilise des systèmes à haute densité de stockage. Ces systèmes sont composés d'un ou de plusieurs disques minces et rigides revêtus d'un film magnétique sur lequel se déplace, en rotation rapide et sans contact, une tête de lecture/écriture de très petite dimension. L'entrefer de cette tête définit la largeur et la longueur d'un élément d'information sur le disque. Actuellement, ces dimensions sont de 12 µm par 0,8 µm.

Cette tête microscopique est, soit rapportée, soit construite directement sur un patin de vol, lequel peut être en céramique ou en silicium. Actuellement, un tel patin a des dimensions de 2 par 3 mm environ.

Ce patin est collé à l'extrémité d'un bras faisant office de ressort. Ce ressort a trois rôles :
- permettre le déplacement de la tête radialement pour chercher une piste,
- maintenir un certain effort apte à plaquer le patin sur le disque, et définir ainsi la hauteur de vol de celui-ci à une valeur donnée,
- supporter et maintenir les liaisons électriques entre la tête et l'électronique associée.

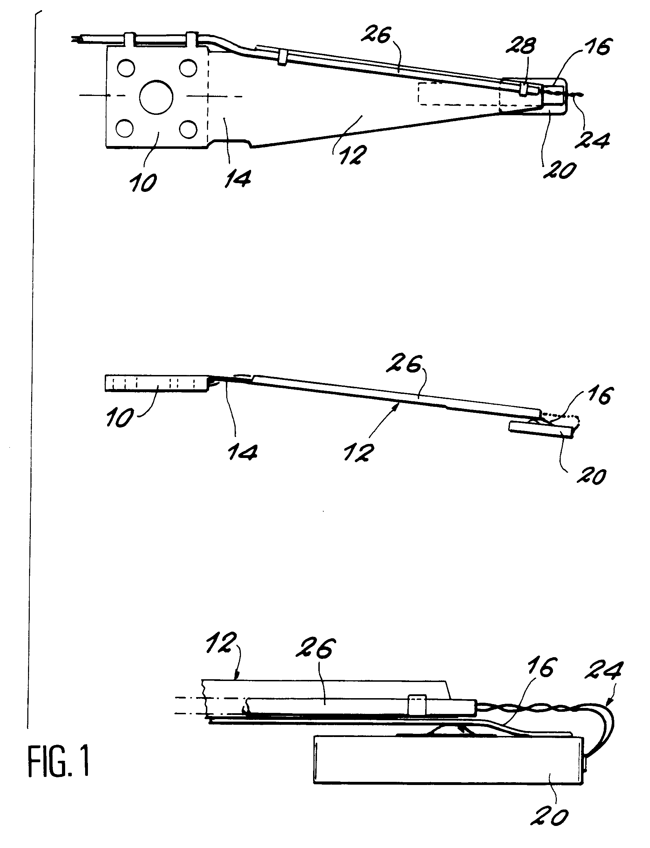

Les ressorts connus à l'heure actuelle sont de dimensions variables mais, à quelques détails près, ils sont très semblables. La figure 1 illustre un tel ressort.

Il est composé de trois parties principales :
- une partie rigide épaisse 10 servant de fixation sur la partie mobile du bras,
- une partie semi-rigide trapézoïdale 12 articulée sur la partie rigide 10 par une zone déformable et ceintrée 14 ; c'est cette zone, qui est en fait une partie non nervurée de la partie semi-rigide 12, qui détermine la raideur du ressort ainsi que l'effort avec lequel il appuyera sur la tête une fois monté dans l'unité de disques,
- une languette 16 servant à l'orientation dans tous les axes (rotule) du patin ; il s'agit d'une pièce très mince et donc plus souple que le ressort principal, évidée pour obtenir un maximum de souplesse ; sur cette languette, on vient positionner avec précision et coller le patin 20 avec sa tête magnétique (non représentée).

La liaison électrique est obtenue par deux fils de cuivre émaillés torsadés 24, de diamètre 38 µm, introduits dans une gaine 26. Cette gaine est fixée, après qu'on a dénudé les extrémités des conducteurs, au ressort, par des pinces 28 prévues dans la découpe du ressort, et serties. La torsade est ceintrée et formée pour obtenir une boucle de géométrie bien précise, pour rejoindre les emplacements de soudure sur le patin (ou plots de connexion).

On effectue ensuite les soudures, par ultrasons, sur les zones de contact prévues, soit sur le côté, soit sur la face arrière des patins.

Un tel assemblage doit présenter plusieurs qualités :
- stabilité en température,
- absence de vibrations,
- faible inertie,
- faible épaisseur totale de l'ensemble pour pouvoir s'insérer dans un empilement de disques espacés de quelques 3 millimètres seulement.

Conçus de cette manière et assemblés comme décrit ci-dessus, de tels ensembles ressort/connexions, entrent pour environ 30 à 40% dans le prix de revient des assemblages complets. Ce coût élevé s'explique par le fait que le ressort lui-même est une pièce relativement complexe et de petites dimensions. Il est réalisé en plusieurs étapes de découpe, pliage et soudure par points.

Par ailleurs, les ressorts ainsi que leur montage sont très variables selon le type d'unité de disque dur dans lequel ils doivent servir. Bien que leur fabrication soit industrialisée, la diversité des modèles conduit à des séries peu importantes et donc à des coûts élevés.

En outre, la manutention de ces ressorts, qui sont fragiles et de petites taille, ne permet pas une automatisation facile du montage des patins. De même, les torsades très flexibles n'ont pas une géométrie bien précise leur permettant d'être intégrées à des chaînes automatisées. De ce fait, les deux dernières opérations sont effectuées manuellement et unitairement.

### Exposé de l'invention

La présente invention a justement pour but de remédier à ces inconvénients, c'est-à-dire de définir un assemblage de faible coût et de montage aisé. Selon l'invention, on ne fabrique plus un ressort à des dimensions particulières définies à la fabrication, selon la demande du client. On réalise le ressort essentiellement à partir de deux éléments standards. L'un est un support flexible, sans constante élastique spécifique ; l'autre, très souple, est un minicircuit imprimé. C'est lors de l'assemblage de ces deux éléments, utilisables pour tous les cas, que l'on ajuste, par un montage spécial automatique, la valeur de la force d'appui, ainsi que les cotes de montage.

C'est sur ce même montage que l'on réalise la liaison ressort/patin. Cette liaison peut dans certains cas, être simultanément électrique et mécanique.

Il s'agit donc de réaliser un ressort "préfabriqué" valable pour toutes les applications, c'est-à-dire universel.

De façon précise, l'invention a pour objet un ressort pour patin de vol, caractérisé par le fait qu'il comprend :
- une lame flexible ayant une première et une seconde extrémités,
- une bande souple comprenant des pistes électriquement conductrices et ayant une première et une seconde extrémités,
- un moyen de fixation de la première extrémité de la bande souple sous la première extrémité de la lame flexible, la bande dépassant légèrement la première extrémité de la lame flexible pour former une languette,
- un patin de vol avec une (ou des) tête(s) magnétique(s), ce patin étant fixé sous la languette, les pistes conductrices de la bande étant connectées à la tête,
- une cale fixée sous la seconde extrémité de la lame flexible et sur la bande souple,
- la bande souple étant en traction et la lame flexible en compression, un effort de haut en bas s'exerçant ainsi sur la première extrémité de la lame flexible et, donc, sur le patin de vol,
- la seconde bande ayant sa seconde extrémité située derrière la cale de fixation et à une certaine distance de celle-ci.

La présente invention a également pour objet un procédé de réalisation de ce ressort. Ce procédé est caractérisé par le fait qu'il comprend les opérations suivantes :
- on découpe une lame flexible pour lui donner une première extrémité de forme appropriée,
- on fixe sous cette lame flexible et à une distance déterminée de cette première extrémité une cale de fixation et on coupe la lame flexible à l'arrière de cette cale de fixation,
- on découpe une bande souple recouverte de pistes électriquement conductrices pour lui donner une première extrémité de forme appropriée,
- on positionne la première extrémité de la lame flexible au-dessus de la première extrémité de la bande souple, de telle sorte que la bande souple dépasse légèrement au-delà de la première extrémité de la lame flexible et forme une languette et on fixe la lame flexible et la bande souple l'une à l'autre,
- on fixe un patin de vol avec sa ou ses tête(s) magnétique(s) d'écriture et/ou de lecture sous la languette de la bande et on effectue les connexions électriques entre la tête et les pistes conductrices de la bande souple,
- on exerce une traction sur la bande souple et une compression de la lame flexible ce qui produit un effort de haut en bas sur la première extrémité de la lame flexible et donc sur le patin de vol,
- on règle la traction et la compression pour que l'effort de haut en bas exercé sur le patin de vol ait une valeur appropriée,
- on fixe la cale de fixation sur la bande souple, puis on supprime la traction sur cette bande,
- on coupe la bande souple derrière la pièce de fixation et à une distance déterminée de celle-ci pour laisser une bande souple de liaison électrique.

Enfin, la présente invention a pour objet une machine mettant en oeuvre ce procédé. Cette machine est caractérisée par le fait qu'elle comprend :
- un premier poste alimenté en une première lame flexible, en une deuxième bande souple revêtue de pistes électriquement conductrices et en une troisième bande apte à constituer des cales de fixation, ce premier poste comprenant des moyens de découpage de la bande flexible, de la bande souple, et de la troisième bande pour constituer des cales de fixation, et des moyens pour fixer une cale sous la première bande,
- un second poste recevant la lame flexible et la bande souple traitées par le premier poste, ce second poste étant alimenté en patins de vol, et comprenant des moyens pour fixer l'extrémité de la lame flexible sur la bande souple en laissant une languette, des moyens pour coller un patin de vol sous la languette et pour établir les connexions électriques entre le patin et les pistes conductrices de la bande souple,
- un troisième poste comprenant des moyens pour mettre en traction la bande souple, des moyens pour mesurer l'effort exercé de haut en bas sur le patin de vol, des moyens pour fixer la bande souple sous la cale de fixation et des moyens pour découper finalement la bande souple à l'arrière de la cale de fixation.

### Brève description des dessins

- la figure 1 montre un ressort pour patin de vol selon l'art antérieur,
- la figure 2 montre un ressort selon l'invention,
- la figure 3 illustre le procédé général de fabrication du ressort de l'invention,
- les figures 4A, 4B, ..., 4K illustrent différentes étapes d'un procédé de réalisation,
- la figure 5 montre quelques exemples de réalisation de la bande souple avec ses pistes conductrices,
- la figure 6 montre l'organisation d'une machine pour la mise en oeuvre du procédé de l'invention.

### Exposé détaillé de modes de réalisation

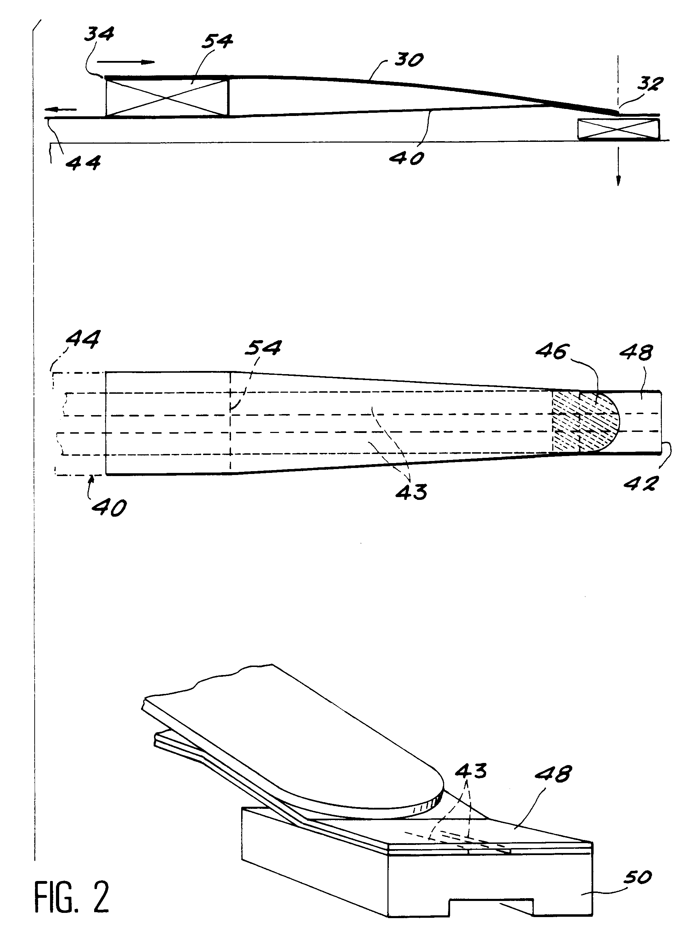

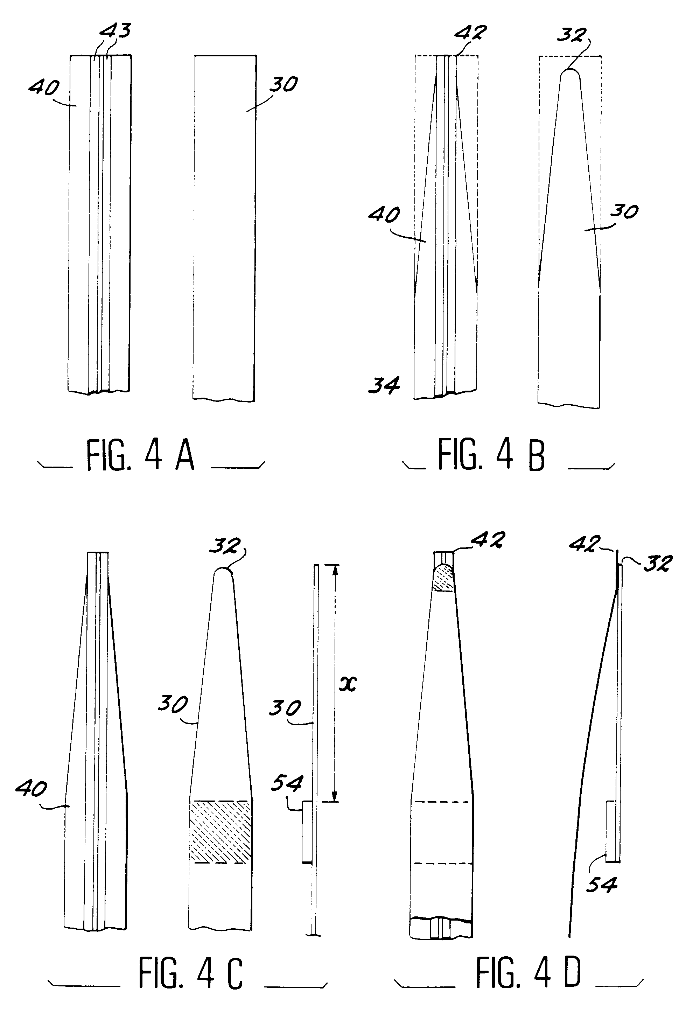

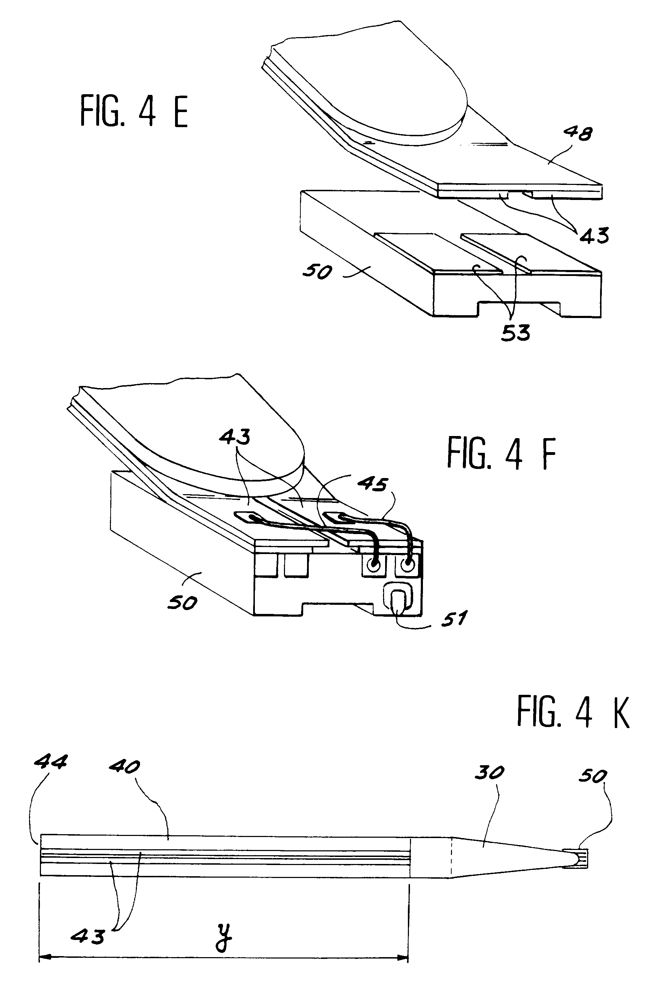

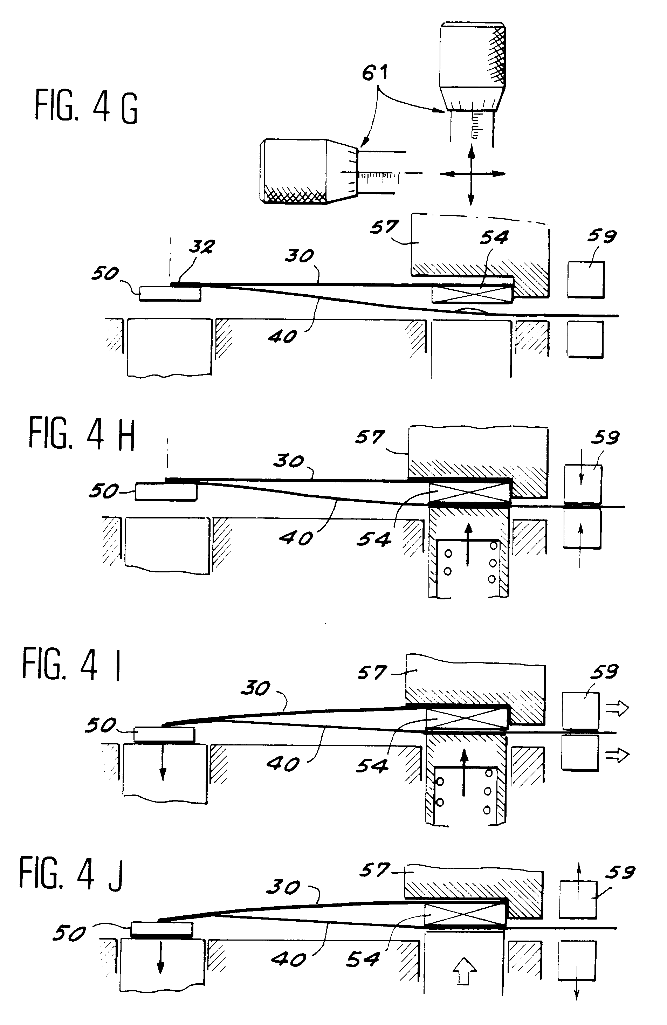

L'assemblage représenté sur la figure 2 comprend :
- une lame flexible 30 ayant une première extrémité 32, de préférence arrondie, et une seconde extrémité 34 ; cette lame peut être en composite fibre de verre/époxy, en fibre de carbone/époxy ou en fibre "Kevlar"/époxy ; son épaisseur est variable de 0,1 à 0,3 mm ; elle est issue d'une bande pré-découpée à la largeur voulue et bobinée ; on utilise ce matériau pour sa légéreté et sa très bonne rigidité en compression, dans le sens des fibres ;
- une bande souple 40 comprenant des pistes électriquement conductrices 43 ; les pistes conductrices 43 de la bande souple 40 peuvent se trouver sur la face de cette dernière en contact avec la lame flexible 30, ou sur l'autre face en contact avec le patin 50, ou encore simultanément sur ces deux faces; cette bande possède une première extrémité 42 et une seconde extrémité 44 ; cette bande en KAPTON (marque déposée) type V (commercialisée par DUPONT) d'épaisseur comprise entre 25 et 75 µm, supporte deux pistes cuivrées ;
- un moyen de fixation 46 (collage,soudage, brasage) de la première extrémité 42 de la bande souple 40 sous la première extrémité 32 de la lame flexible 30, la bande 40 dépassant légèrement de la première extrémité 32 de la lame flexible 30 pour former une languette 48 ;
- un patin de vol 50 fixé sous la languette 48 ; la languette dépasse la lame 30 de préférence d'une demi-longueur de patin, ou une demi-largeur (selon le montage) de telle sorte que l'extrémité 32 de la lame supérieure 30 appuie exactement au centre géométrique du patin, une fois le patin collé soudé ou brasé en alignement parfait par rapport aux bords de cette languette ; les pistes 43 peuvent être placées sur la face de la bande 40 en contact avec la lame flexible 30 (fig. 4F), ou sur la face en contact avec le patin 50 (fig. 4E), ou encore sur ces deux faces ;
- une cale 54 fixée sous la seconde extrémité 34 de la lame flexible 30 et sur la bande souple 40 ; cette cale peut être d'épaisseur relativement importante : 0,5 à 1,2 mm environ selon le montage, entre les deux lames ; cet empilement est collé ou serti ou riveté sous contrainte ; en pratique on met la lame inférieure 40 en traction et la lame supérieure 30 en compression ; l'écart du point d'application de la tension sur la bande inférieure et de celui de sa réaction sur la lame supérieure engendre une composante verticale de haut en bas sur l'extrémité du ressort où est fixée la tête ;
- la bande souple 40 étant en traction entre la cale 54 et le moyen de fixation 46 et la lame flexible 30 étant en compression, un effort de haut en bas s'exerçant ainsi sur la première extrémité 32 de la lame flexible 30 et, donc, sur le patin de vol ;
- la seconde bande 40 ayant sa seconde extrémité 44 située derrière la cale de fixation 54 et à une certaine distance Y de celle-ci.

L'effet de rotulage, obtenu sur les ressorts classiques par une partie sphérique de la languette en appui sur le ressort, est obtenu dans le cas de l'invention par l'effet combiné de l'arrondi de l'extrémité de la lame supérieure et de la flèche angulaire de celle-ci.

Aussi faible que soit ce degré de liberté, il est suffisant pour absorber un éventuel roulis du patin, de l'ordre de quelques secondes d'angle. On peut ajuster la forme de l'extrémité 32 pour accentuer ou limiter cet effet pour chaque type de ressort.

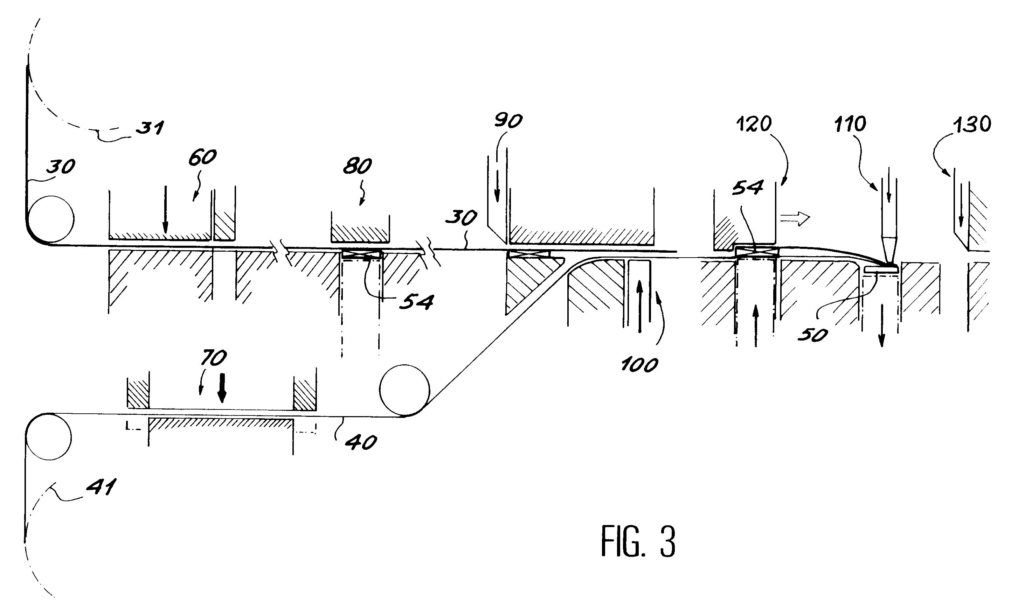

Sur la figure 3 sont représentées, de manière schématique, les principales étapes d'un procédé de réalisation du ressort qui vient d'être décrit. Ces étapes sont illustrées de manière plus détaillée sur les figures 4A à 4K :
- **Etape 60 :**: - on découpe la bande flexible 30 qui provient d'un rouleau 31 (Fig. 4A) pour lui donner une première extrémité de forme appropriée, par exemple arrondie (Fig. 4B),
- **Etape 70 :**: - on découpe la bande souple 40 provenant d'un rouleau 41, cette bande étant recouverte de pistes électriquement conductrices 43 (Fig. 4A) pour lui donner une première extrémité de forme appropriée (Fig. 4B),
- **Etape 80 :**: - on fixe sous la bande flexible 30 et à une distance déterminée X de la première extrémité 32, une cale de fixation 54 (Fig. 4C),
- **Etape 90 :**: - on coupe la bande flexible 30 à l'arrière de la cale de fixation 54 (Fig. 4D),
- **Etape 100 :**: - on positionne la première extrémité 32 de la bande flexible 30 au-dessus de la première extrémité 42 de la bande souple 40, de telle sorte que la bande souple dépasse légèrement au-delà de l'extrémité de la bande flexible 30 et forme une languette 48 et on fixe la bande flexible et la bande souple l'une à l'autre (Fig. 4D),
- **Etape 110 :**: - on fixe un patin de vol 50 avec sa tête magnétique d'écriture et/ou de lecture 51 sous la languette 48 de la bande 40 (Fig. 4E) ; sur la figure 4E on voit des pavés de colle conductrice 53 sur lesquels vont venir prendre appui les pistes 43 ; on effectue ensuite les connexions électriques 45 entre la tête 51 et les pistes conductrices 43 de la bande souple (Fig. 4F),
- **Etape 120 :**: - on règle le montage 57, 59 d'assemblage du ressort en fonction de la "hauteur de montage" ("z-height") du ressort dans l'unité du disque dur et cela au moyen de vis micrométriques 61, puis on exerce une traction sur la bande souple 40 et une compression de la lame flexible 30 ; pour cela, la cale 54 est disposée contre une butée 57 (Fig. 4G), on saisit la bande souple 40 dans une pince 59 (Fig. 4H) et on exerce une traction T sur cette bande (Fig. 41) ; ceci met simultanément la bande 40 en traction et la lame 30 en compression, ce qui produit un effort de haut en bas sur la première extrémité de la lame flexible et donc sur le patin de vol 50 ; on règle la traction et la compression pour que l'effort N exercé sur le patin de vol 50 ait une valeur appropriée (Fig. 41) ; on bloque l'ensemble lame 30, cale 54, lame 40 (Fig. 4J) ; et on fixe la cale de fixation 54 sur la bande souple 40 (par exemple par collage), puis on supprime la traction sur cette bande 40 (Fig. 4J),
- **Etape 130 :**: - on coupe la bande souple à l'extrémité 44 derrière la pièce de fixation et à une distance déterminée Y de celle-ci (Fig. 4K) pour laisser une bande souple permettant la liaison électrique avec le bras support du patin.

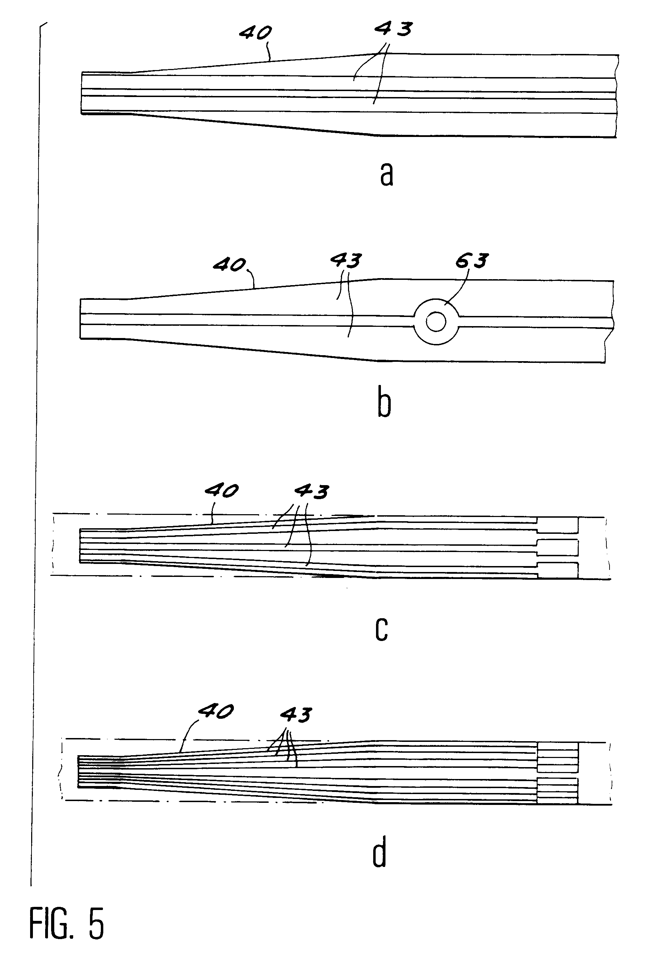

La figure 5 montre quatre modes de réalisation d'une bande souple 40 avec des pistes conductrices 43. Sur la partie a, les deux pistes sont étroites et continues. Les pistes ont une largeur de 0,5 à 0,8 mm et sont espacées de 0,2 à 0,4 mm. Sur la partie b, ces pistes également continues sont larges et occupent toute la largeur de la bande. Cette variante correspond à un montage par rivetage. Il est alors nécessaire de prévoir une ouverture 63 pour le rivet. Sur la partie c, on voit trois pistes avec des plots de contact et sur la partie d deux groupes de plusieurs pistes. Dans ces deux derniers modes, les pistes constituent des motifs indépendants reproduits périodiquement sur la bande souple et continue 40.

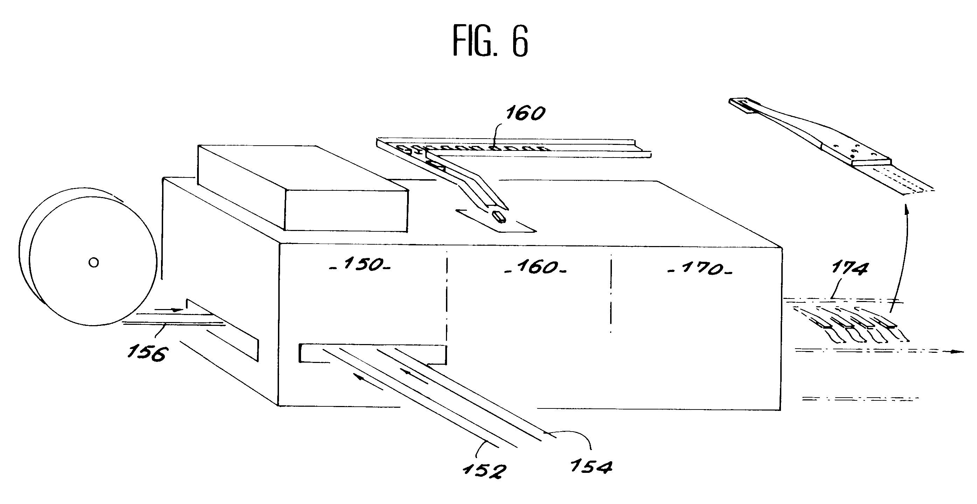

Sur la figure 6, on voit l'architecture générale d'une machine pour la mise en oeuvre du procédé qui vient d'être décrit. Cette machine comprend :
- un premier poste 150 alimenté en la première bande flexible 152, en la deuxième bande souple 154 revêtue de pistes électriquement conductrices et en une troisième bande 156 apte à constituer des cales de fixation ; ce premier poste comprend des moyens de découpage de la bande flexible et de la bande souple, et des moyens de découpage de la troisième bande pour constituer des cales de fixation ; il comprend encore des moyens pour fixer une cale sous la première bande, comme il a été expliqué en liaison avec les figures 3 et 4A, 4B, 4C ;
- un deuxième poste 160 recevant la bande flexible et la bande souple traitées par le premier poste ; ce deuxième poste est alimenté en patins de vol par des moyens 162 ; ce deuxième poste comprend des moyens pour fixer l'extrémité de la première bande sur la première bande en laissant une languette, des moyens pour coller un patin de vol sous la languette et pour établir les connexions électriques entre le patin et les pistes conductrices de la bande souple, comme il a été expliqué en liaison avec la figure 3 et les figures 4D, 4E, 4F ;
- un troisième poste 170 comprenant des moyens pour mettre en traction la bande souple, des moyens 61 (Fig. 4G) pour régler la hauteur de montage ("z-height") de l'unité de disque dur ; des moyens pour mesurer l'effort exercé de haut en bas sur le patin de vol, des moyens pour fixer la bande souple sous la cale de fixation, comme il a été expliqué en liaison avec les figures 4G, 4H, 4I, 4J et des moyens pour découper finalement la bande souple à une distance déterminée Y de la cale de fixation (Fig. 4K).

## Revendications

1. Ressort pour patin de vol, caractérisé par le fait qu'il comprend :
- une lame flexible (30) ayant une première et une seconde extrémités (32, 34),
- une bande souple (40) comprenant des pistes électriquement conductrices (43) et ayant une première et une seconde extrémités (42, 44),
- un moyen de fixation (46) de la première extrémité (42) de la bande souple (40) sous la première extrémité (32) de la lame flexible (30), la bande (40) dépassant légèrememt la première extrémité (32) de la lame flexible (30) pour former une languette (48),
- un patin de vol (50) avec une (ou des) tête(s) magnétique(s) (51), ce patin (50) étant fixé sous la languette (48), les pistes conductrices (43) de la bande étant connectées à la tête (51),
- une cale (54) fixée sous la seconde extrémité (34) de la lame flexible (30) et sur la bande souple (40),
- la bande souple (40) étant en traction entre la cale (54) et le moyen de fixation (46) et la lame flexible (30) étant en compression, un effort de haut en bas s'exerçant ainsi sur la première extrémité (32) de la lame flexible (30) et, donc, sur le patin de vol (50),
- la seconde bande (40) ayant sa seconde extrémité (44) située derrière la cale de fixation (54) et à une certaine distance (Y) de celle-ci.

2. Ressort selon la revendication 1, caractérisé par le fait que le moyen de fixation (46) de la première extrémité (32) de la lame flexible (30) sur la bande souple (40) est un moyen de collage, de soudage ou de brasage.

3. Ressort selon la revendication 1, caractérisé par le fait que la seconde extrémité (34) de la lame flexible (30), la cale (54) et la bande souple (40) sont collées, rivetées ou soudées.

4. Ressort selon la revendication 1, caractérisé par le fait que la lame flexible (30) présente une certaine largeur au niveau de la cale de fixation (54) et une largeur qui va en décroîssant vers la première extrémité (32).

5. Ressort selon la revendication 4, caractérisé par le fait que la première extrémité (32) de la lame flexible (30) est arrondie.

6. Ressort selon la revendication 1, caractérisé par le fait que la languette (48) dépasse la première extrémité (32) de la lame flexible (30) d'une demi-longueur ou d'une demi-largeur du patin de vol (50), la première extrémité (32) de la lame flexible (30) se situant ainsi juste au-dessus du centre géométrique du patin (50).

7. Ressort selon la revendication 1, caractérisé par le fait que la bande souple (40) est composée d'une feuille isolante souple sur une face de laquelle sont imprimées des pistes conductrices (43).

8. Ressort selon la revendication 6, caractérisé par le fait que la lame flexible (30) présente une épaisseur comprise entre 0,1 et 0,3 mm.

9. Ressort selon la revendication 8, caractérisé par le fait que la lame flexible est en composite fibre/résine.

10. Ressort selon la revendication 9, caractérisé par le fait que la lame flexible est en composite fibre de verre/époxy ou fibre de carbone/époxy ou fibre en Kevlar/époxy.

11. Ressort selon la revendication 8, caractérisé par le fait que la bande souple (40) présente une épaisseur comprise entre 25 et 75 µm.

12. Ressort selon la revendication 11, caractérisé par le fait que la bande souple (40) est en matériau du type Kapton.

13. Procédé de réalisation d'un ressort pour patin de vol selon la revendication 1, caractérisé par le fait qu'il comprend les opérations suivantes :
- on découpe une lame flexible (30) pour lui donner une première extrémité (32) de forme appropriée,
- on fixe sous cette lame flexible (30) et à une distance déterminée (X) de cette première extrémité (32) une cale de fixation (54) et on coupe la lame flexible (30) à l'arrière de cette cale de fixation (54),
- on découpe une bande souple (40) recouverte de pistes électriquement conductrices (43) pour lui donner une première extrémité (42) de forme appropriée,
- on positionne la première extrémité (32) de la lame flexible (30) au-dessus de la première extrémité (42) de la bande souple (40), de telle sorte que la bande souple (40) dépasse légèrement au-delà de la première extrémité (32) de la bande flexible (30) et forme une languette (48) et on fixe la lame flexible (30) et la bande souple (40) l'une à l'autre,
- on fixe un patin de vol (50) avec sa ou ses tête(s) magnétique(s) 51 d'écriture et/ou de lecture sous la languette (48) de la bande (40) et on effectue les connexions électriques entre la tête (51) et les pistes conductrices (43) de la bande souple (40),
- on exerce une traction sur la bande souple (40) et une compression de la lame flexible (30) qui produit un effort de haut en bas sur la première extrémité (32) de la lame flexible (30) et donc sur le patin de vol (50),
- on règle la traction et la compression pour que l'effort de haut en bas exercé sur le patin de vol (50) ait une valeur appropriée,
- on fixe la cale de fixation (54) sur la bande souple (40), puis on supprime la traction sur cette bande (40),
- on coupe la bande souple (40) derrière la pièce de fixation (54) et à une distance déterminée (Y) de celle-ci pour laisser une bande souple de liaison électrique.

14. Procédé selon la revendication 13, caractérisé par le fait que pour exercer une traction sur la bande souple (40) et une compression sur la lame flexible (30), on met en butée arrière (57) la cale de fixation (54) et on exerce une traction sur la bande souple (40).

15. Procédé selon la revendication 13, caractérisé par le fait que, pour fixer sous la lame flexible (30) la cale de fixation (54) on procède par collage, sertissage ou rivetage.

16. Procédé selon la revendication 13, caractérisé par le fait que pour fixer les premières extrémités (32, 42) de la lame flexible (30) et de la bande souple (40), on procède par collage, soudage ou brasage.

17. Procédé selon la revendication 13, caractérisé par le fait qu'on découpe la lame flexible (30) pour lui donner une forme s'amincissant vers la première extrémité (32), cette extrémité étant de forme arrondie.

18. Procédé selon la revendication 13, caractérisé par le fait qu'on réalise des cales de fixation (54) en découpant une troisième bande (156) en matériau approprié.

19. Machine pour la fabrication de ressorts selon la revendication 1, et mettant en oeuvre le procédé selon la revendication 13, caractérisée par le fait qu'elle comprend :
- un premier poste (150) alimenté en une première lame flexible (152), en une deuxième bande souple (154) revêtue de pistes électriquement conductrices et une troisième bande (156) apte à constituer des cales de fixation, ce premier poste comprenant des moyens de découpage de la bande flexible, de la bande souple, et de la troisième bande pour constituer des cales de fixation et des moyens pour fixer une cale sous la première bande,
- un second poste (160) recevant la lame flexible et la bande souple traitées par le premier poste (150), ce second poste étant alimenté en patins de vol (162), et comprenant des moyens pour fixer l'extrémité (32) de la lame flexible (30) sur la bande souple (40) en laissant une languette (48), des moyens pour coller un patin de vol (50) sous la languette (48) et pour établir les connexions électriques entre le patin (50) et les pistes conductrices (43) de la bande souple (40),
- un troisième poste (170) comprenant des moyens pour mettre en traction la bande souple (40), des moyens (61) pour régler la hauteur de montage ("z-height") de l'unité de disque dur, des moyens pour mesurer l'effort exercé de haut en bas sur le patin de vol, des moyens pour fixer la bande souple sous la cale de fixation (54) et des moyens pour découper finalement la bande souple à l'arrière de la cale de fixation.
